# EUROPÄISCHE PATENTSCHRIFT

(11) **EP 0 774 648 B1**
(45) Veröffentlichungstag und Bekanntmachung des Hinweises auf die Patenterteilung: **12.07.2000**
(21) Anmeldenummer: 96116831.7
(22) Anmeldetag: 19.10.1996
(51) Int. Cl.: G01D 5/34, G01D 5/249

(54) **Winkelsensor**
Angle sensor
Capteur d'angles

(30) Priorität: 17.11.1995 DE 19542897
(43) Veröffentlichungstag der Anmeldung: 21.05.1997
(73) Patentinhaber: Leopold Kostal GmbH & Co. KG, 58507 Lüdenscheid (DE)
(72) Erfinder: Kerkmann, Detleff, 58769 Nachrodt (DE); Sudholz, Horst, 26386 Wilhelmshaven (DE); Frenzel, Maik, 58509 Lüdenscheid (DE)

(56) Entgegenhaltungen:
- EP-A- 0 377 097
- EP-A- 0 660 263
- DE-A- 2 852 660
- DE-A- 3 410 097
- US-A- 4 250 380
- PATENT ABSTRACTS OF JAPAN vol. 6, no. 217 (P-152) [1095] , 30.Oktober 1982 & JP 57 120814 A (SHARP K.K.), 28.Juli 1982,

## Beschreibung

Die Erfindung betrifft einen Winkelsensor mit einem ortsfesten Stator und einem um eine Drehachse drehbaren Rotor, wobei der Stator mehrere, jeweils gleich ausgeführte, in einer senkrecht zur Drehachse ausgerichteten Ebene, auf einer zur Drehachse konzentrischen Kreislinie in Umfangsrichtung verteilt angeordnete Sensorelemente aufweist, die mit einem an dem Rotor vorhandenen Codering kooperieren.

Insbesondere betrifft die Erfindung einen solchen Winkelsensor für den Einsatz in einer Lenkeinrichtung eines Kraftfahrzeugs.

Die DE 43 00 663 C1 beschreibt einen Winkelsensor der gattungsgemäßen Art, wobei eine Leiterplatte vorhanden ist, die sich über einen Vollkreis erstreckt. Infolgedessen benötigt die Leiterplatte viel Platz. Die Montage ist aufwendig, da die Leiterplatte über die als Lenkeinrichtung eingesetzte Einrichtung bzw. das der Lenkeinrichtung zugehörige Mantelrohr montiert werden muß.

Aufgabe der Erfindung ist die Reduzierung des Platzbedarfs für den Winkelsensor und die Vereinfachung der Montage.

Diese Aufgabe wird nach der Erfindung dadurch gelöst, daß der Codering mit n, wobei n>1 ist, geometrisch gleich aufgebauten, jeweils eine gleiche Codierung aufweisenden Codering-Segmenten versehen ist und daß sich die Sensorelemente und jedes Codering-Segment über einen Umfangswinkelbereich von 360°/n erstrecken.

Die Erfindung unterscheidet sich insofern vom Stand der Technik, als der gesamte Winkelsensor auf ein Umfangssegment reduziert ist, so daß der Platzbedarf auf dieses Segment des Vollkreises herabgesetzt ist. Die Montage ist wesentlich vereinfacht, da das Segment seitlich am Mantelrohr montiert werden kann.

Die Codering-Segmente rufen in Verbindung mit m Sensorelementen einen einschrittigen, verketteten m-Bit-Code hervor, durch den die Winkelposition innerhalb eines Segments eindeutig gekennzeichnet ist.

Die Erfassung des Winkels über ein Segment hinaus erfolgt im allgemeinen aufgrund einer Initialisierung des Systems durch einen Referenzwert und anschließende (digitale) Zählung der Segmente gemäß der Drehrichtung. Durch ein zusätzliches Merkmal zur unterschiedlichen Kennzeichnung der verschiedenen Codering-Segmente, wie z.B. im Falle der Verwendung von Gabel- oder Reflexionslichtschranken durch unterschiedliche Transmission- oder Reflexionseigenschaften, läßt sich auch ohne eine solche Initialisierung eine absolute Messung zumindest über einen Vollkreis realisieren.

Ein eindeutiger, geschlossener Code ist unter anderem dadurch erzielbar, daß die Sensorelemente untereinander einen gleichen Winkelabstand aufweisen. Zur einfachen Aufnahme der Sensorelemente weist der Stator vorzugsweise eine senkrecht zur Drehachse ausgerichtete Leiterplatte auf.

Eine erste Realisierung mit optoelektronischen Sensorelementen gelingt dadurch, daß die Sensorelemente Gabellichtschrankeneinheiten sind, und daß der Codering ein in dem von diesen Gabellichtschrankeneinheiten gebildeten Ringspalt angeordneter Codeblendenring ist, wobei in einer bevorzugten Ausführungsform die verschiedenen Codering-Segmente eine unterschiedliche Lichtdurchlässigkeit haben.

Eine zweite Realisierung mit optoelektronischen Sensorelementen gelingt dadurch, daß die Sensorelemente Reflexionslichtschrankeneinheiten sind, und daß der Codering ein Codereflexionsring ist, der diesen Reflexionslichtschrankeneinheiten gegenüber angeordnet ist und zwar vorzugsweise mit seinem inneren und/oder äußeren Umfang, wobei in einer bevorzugten Ausführungsform die verschiedenen Codering-Segmente unterschiedliche Reflexionseigenschaften haben.

Eine magnetische Messung wird dadurch ermöglicht, daß die Sensorelemente mit jeweils einem Magneten kooperierende Magnetfeldsensoren sind, und daß der Codering ein weichmagnetischer Codeblendenring ist, wobei entweder jeder der Magnetfeldsensoren und der diesem jeweils zugeordnete Magnet auf einer Seite des weichmagnetischen Codeblendenrings hintereinander angeordnet sind, oder jeder der Magnetfeldsensoren und der diesem jeweils zugeordnete Magnet sich gegenüberliegend auf den verschiedenen Seiten des weichmagnetischen Codeblendenrings angeordnet sind.

Eine andere Art der magnetischen Messung wird dadurch verwirklicht, daß die Sensorelemente Magnetfeldsensoren sind, und daß der Codering ein permanentmagnetischer Ring mit einer codierten Aufmagnetisierung ist. Günstige Abmessung lassen sich dadurch erzielen, daß der Umfangswinkelbereich 360°/5 = 72° beträgt, wobei die Verwendung von sechs Sensorelementen im Abstand von jeweils 12° zur Erzielung eines einschrittigen, verketteten 6-Bit-Codes bevorzugt ist.

Ausführungsbeispiele werden anhand der Zeichnungen erläutert, in denen darstellen:
- **Fig. 1:**: eine Explosionsdarstellung eines ersten Ausführungsbeispiels
- **Fig. 2:**: eine Explosionsdarstellung eines zweiten Ausführungsbeispiels

Ein ringförmiger Stator 1 ist konzentrisch zur Lenkspindel an der Lenkeinrichtung bzw. dem Mantelrohr 9 drehfest montiert. An dem Stator 1 sitzt eine Leiterplatte 2, die als sektorförmiges Segment ausgebildet ist und sich über einen Umfangswinkel von 72° = 360°/5 erstreckt. Der Stator 1 weist ein auf die Leiterplatte 2 ausgerichtetes, sich über einen Umfangswinkel von 72° erstreckendes Ringsegmentgehäuse 3 zur Aufnahme von sechs in gleichen Winkelabständen von 12° angeordneten, als Gabellichtschrankeneinheiten ausgeführten Sensorelementen 4 auf. Die Senderelemente und Empfängerelemente der Gabellichtschrankeneinheiten sind unmittelbar mit der Leiterplatte 2 kontaktiert und liegen einander auf verschiedenen Seiten eines Ringspaltes 5 gegenüber. Der Ringspalt 5 ist konzentrisch zur Achse der Lenkspindel ausgerichtet.

Eine Rotorscheibe ist mit der Lenkspindel gekoppelt und als Codering 7 mit fünf gleichen, sich jeweils über einen Umfangswinkel von 72° erstreckenden, blendenförmigen Codering-Segmenten 8 ausgebildet. Die Codering-Segmente 8 werden bei der Drehung des Coderings 7 durch den Ringspalt 5 hindurchbewegt. Die Codering-Segmente 8 erzeugen in Verbindung mit den Sensorelementen 4 einen einschrittigen, verketteten Code. Im hier dargestellten Fall mit sechs Lichtschranken handelt es sich um einen 6-Bit-Code.

Der einschrittige, verkettete Code ermöglicht durch fortlaufende Zählung der Codering-Segmente 8 eine genaue Positionsbestimmung auch über mehrere Umdrehungen der Lenkspindel. Ein Referenzwert wird unabhängig von dem Winkelsensor durch eine Gleichlaufmessung der Fahrzeugräder, durch eine Drehung der Lenkspindel über den vollen Lenkbereich oder durch ein anderes Initialisierungsverfahren gewonnen.

Zur eindeutigen Identifizierung der Codering-Segmente 8 und damit zur absoluten Winkelmessung über einen vollen Kreisumfang können die Codering-Segmente 8 eine unterschiedliche Lichtdurchlässigkeit haben, die von den Lichtschranken in Analogform erfaßt wird. Damit läßt sich der jeweilige Lenkwinkel auf dem gesamten Kreisumfang von 360° eindeutig und absolut festlegen.

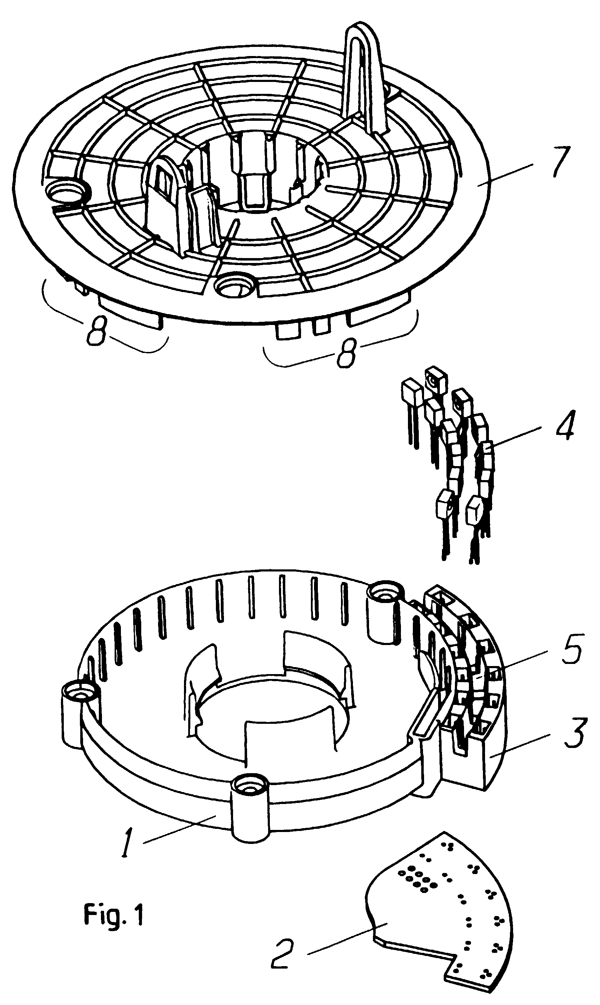

Der in Fig. 1 dargestellte Winkelsensor ist Bestandteil einer sogenannten Wickelfederkassette, die zur Übertragung von Signalen bzw. Energie von einem feststehenden zu einem drehbaren Teil der Lenkeinrichtung von Kraftfahrzeugen vorgesehen ist.

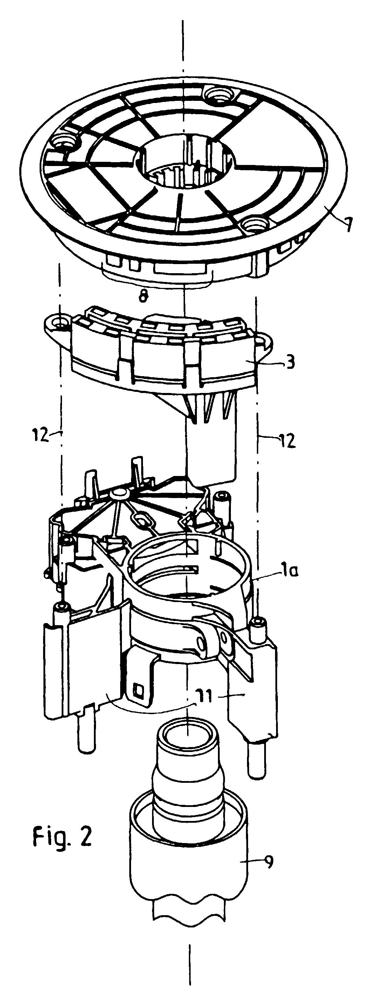

Bei dem Ausführungsbeispiel nach Fig. 2 trägt ein Halterahmen 1a oder Stator, der ebenfalls an der Lenkeinrichtung oder dem Mantelrohr 9 ortsfest gehalten ist, auf Konsolen 11 ein Ringsegmentgehäuse 3, dessen Befestigungsvorrichtungen 12 schematisch angegeben sind. Das Segmentgehäuse 3 weist einen segmentförmigen Ringspalt 5 auf, zu dessen beiden Seiten die Lichtschranken angeordnet sind. Der Codering 7 mit den Codering-Segmenten 8 ist in gleicher Weise, wie in Verbindung mit Fig. 1 beschrieben, aufgebaut und angeordnet.

## Patentansprüche

1. Winkelsensor mit einem ortsfesten Stator (1), und einem um eine Drehachse drehbaren Rotor, wobei der Stator (1) mehrere jeweils gleich ausgeführte, in einer senkrecht zur Drehachse ausgerichteten Ebene, auf einer zur Drehachse konzentrischen Kreislinie in Umfangsrichtung verteilt angeordnete Sensorelemente (4) aufweist, die mit einem an dem Rotor vorhandenen Codering (7) kooperieren, **dadurch gekennzeichnet**, daß der Codering (7) mit n, wobei n>1 ist, geometrisch gleich aufgebauten, jeweils eine gleiche Codierung aufweisenden Codering-Segmenten (8) versehen ist, und daß sich die Sensorelemente (4) und jedes der Codering-Segmente (8) über einen Umfangswinkelbereich von 360°/n erstrecken.

2. Winkelsensor nach Anspruch 1, **dadurch gekennzeichnet**, daß die Sensorelemente (4) untereinander einen gleichen Winkelabstand aufweisen.

3. Winkelsensor nach Anspruch 1 oder 2, **dadurch gekennzeichnet**, daß der Stator (1) eine senkrecht zur Drehachse ausgerichtete Leiterplatte (2) zur Aufnahme der Sensorelemente (4) aufweist.

4. Winkelsensor nach einem der Ansprüche 1 bis 3, **dadurch gekennzeichnet**, daß die Sensorelemente (4) Gabellichtschrankeneinheiten sind, und daß der Codering (7) ein in dem von diesen Gabellichtschrankeneinheiten gebildeten Ringspalt (5) angeordneter Codeblendenring ist.

5. Winkelsensor nach Anspruch 4, **dadurch gekennzeichnet**, daß die verschiedenen Codering-Segmente (8) eine unterschiedliche Lichtdurchlässigkeit haben.

6. Winkelsensor nach einem der Ansprüche 1 bis 3, **dadurch gekennzeichnet**, daß der Codering (7) ein Codereflexionsring ist, und daß die Sensorelemente (4) Reflexionslichtschrankeneinheiten sind, die dem Codereflexionsring gegenüber angeordnet sind.

7. Winkelsensor nach Anspruch 6, **dadurch gekennzeichnet**, daß die Reflexionslichtschrankeneinheiten dem inneren und/oder äußeren Umfang des Codereflexionsrings gegenüber angeordnet sind.

8. Winkelsensor nach Anspruch 6 oder 7, **dadurch gekennzeichnet**, daß die verschiedenen Codering-Segmente (8) des Codereflexionsrings unterschiedliche Reflexionseigenschaften haben.

9. Winkelsensor nach einem der Ansprüche 1 bis 3, **dadurch gekennzeichnet**, daß die Sensorelemente (4) mit jeweils einem Magneten kooperierende Magnetfeldsensoren sind, und daß der Codering (7) ein weichmagnetischer Codeblendenring ist.

10. Winkelsensor nach Anspruch 9, **dadurch gekennzeichnet**, daß jeder der Magnetfeldsensoren und der diesem jeweils zugeordnete Magnet auf einer Seite des weichmagnetischen Codeblendenrings hintereinander angeordnet sind.

11. Winkelsensor nach Anspruch 9, **dadurch gekennzeichnet**, daß jeder der Magnetfeldsensoren und der diesem jeweils zugeordnete Magnet sich gegenüberliegend auf den verschiedenen Seiten des weichmagnetischen Codeblendenrings angeordnet sind.

12. Winkelsensor nach einem der Ansprüche 1 bis 3, **dadurch gekennzeichnet**, daß die Sensorelemente (4) Magnetfeldsensoren sind, und daß der Codering (7) ein permanentmagnetischer Ring mit einer codierten Aufmagnetisierung ist.

13. Winkelsensor nach einem der Ansprüche 1 bis 12, **dadurch gekennzeichnet**, daß der Codering (7) in Verbindung mit m Sensorelementen (4) einen einschrittigen, verketteten m-Bit-Code hervorruft.

14. Winkelsensor nach einem der Ansprüche 1 bis 13, **dadurch gekennzeichnet**, daß der Umfangswinkelbereich 360°/5 = 72° beträgt.

15. Winkelsensor nach Anspruch 14, **dadurch gekennzeichnet**, daß auf dem Umfangswinkelbereich sechs Sensorelemente (4) angeordnet sind.

16. Verwendung eines Winkelsensors nach einem der vorhergehenden Ansprüche in einer Lenkeinrichtung eines Kraftfahrzeugs, **dadurch gekennzeichnet**, daß der Stator (1) an dem Mantelrohr (9) der Lenkeinrichtung drehfest montiert ist, und daß der den Codering (7) umfassende Rotor drehfest mit der Lenkspindel der Lenkeinrichtung verbunden ist.

## Claims

1. Angle sensor comprising a stationary'stator (1) and a rotor that is rotatable about an axis of rotation, whereby the stator (1) has multiple and identically constructed sensor elements (4) circumferentially positioned on a plane normal to the axis of rotation and aligned along an arc concentric to the axis of rotation, and whereby these sensor elements (4) interact with the existing code ring (7) on the rotor, characterized in that the code ring (7) has n geometrically identical code ring segments (8), where n > 1, which have identical codification and that the sensor elements (4) and each of the code ring segments (8) cover a circumferential angular range of 360°/n.

2. Angle sensor in accordance with claim 1, characterized in that the sensor elements (4) are positioned at identical angular intervals apart from each other.

3. Angle sensor in accordance with claim 1 or 2, characterized in that the stator (1) has a circuit board (2) that receives the sensor elements (4) and whose plane is positioned normal to the axis of rotation.

4. Angle sensor in accordance with one of the claims 1 to 3, characterized in that the sensor elements (4) are fork-type optical transducers and that the code ring (7) is an aperture code ring which is positioned inside the raceway (5) that is formed by these fork-type optical transducers positioned along an arc.

5. Angle sensor in accordance with claim 4, characterized in that the different code ring segments (8) possess different light transparencies.

6. Angle sensor in accordance with one of the claims 1 to 3, characterized in that the code ring (7) is a code reflection ring and that the sensor elements (4) are light-reflection optical transducers that are positioned opposite the reflection code ring.

7. Angle sensor in accordance with claim 6, characterized in that the light reflection optical transducers are positioned opposite the inner and/or outer periphery of the reflection code ring.

8. Angle sensor in accordance with claim 6 or 7, characterized in that the different code ring segments (8) of the reflection code ring possess different reflection properties.

9. Angle sensor in accordance with one of the claims 1 to 3, characterized in that the sensor elements (4) are magnetic field sensors which each interact with a magnet and that the code ring (7) is a ferro-magnetic aperture code ring.

10. Angle sensor in accordance with claim 9, characterized in that each of the magnetic field sensors and its assigned magnet are positioned directly next to each other on one side of the ferro-magnetic aperture code ring.

11. Angle sensor in accordance with claim 9, characterized in that each of the magnetic field sensors and its assigned magnet are positioned opposite each other on opposite sides of the ferro-magnetic aperture code ring.

12. Angle sensor in accordance with one of the claims 1 to 3, characterized in that the sensor elements (4) are magnetic field sensors and that the code ring (7) is a permanently magnetized ring with a coded magnetization.

13. Angle sensor in accordance with one of the claims 1 to 12, characterized in that the code ring (7) generates a single step, interlinked m-bit-code in cooperation with m sensor elements.

14. Angle sensor in accordance with one of the claims 1 to 13, characterized in that the circumferential angular range is 360°/5 = 72°.

15. Angle sensor in accordance with claim 14, characterized in that six sensor elements (4) are positioned along an arc over the circumferential angular range.

16. Use of an angle sensor in accordance with one of the previous claims in a steering unit of a motor vehicle, characterized in that the stator (1) is fixed to the steering column (9) of the steering unit and that the rotor that includes the code ring (7) is fixed to the rotatable steering spindle of the steering unit.

## Revendications

1. Détecteur d'angle comprenant un stator stationnaire (1) et un rotor qui tourne autour d'un axe de rotation, le stator (1) présentant plusieurs éléments sensoriels (4) de même conception, disposés sur un plan perpendiculaire à l'axe de rotation et répartis circonférentiellement sur une ligne circulaire, concentriquement par rapport à l'axe de rotation, lesquels éléments sensoriels coopèrent avec un anneau de code (7) qui équipe le rotor,
caractérisé en ce que
l'anneau de code (7) est pourvu de n - n>1 - de segments (8) de même conception géométrique et présentant le même code et que les éléments sensoriels (4) et chacun des segments (8) de l'anneau de code s'étendent sur une zone d'angle inscrit de 360°/n.

2. Détecteur d'angle selon la revendication 1,
caractérisé en ce que
les éléments sensoriels (4) sont disposés à la même distance les uns des autres.

3. Détecteur d'angle selon la revendication 1 ou 2,
caractérisé en ce que
le stator (1) présente une plaquette de circuits imprimés (2) perpendicualire à l'axe de rotation et destinée accueillir les éléments sensoriels (4).

4. Détecteur d'angle selon l'une des revendications 1 à 3,
caractérisé en ce que
les éléments sensoriels (4) sont des unités de barrières lumineuses fourchues et que l'anneau de code (7) est disposé dans l'interstice annulaire (5) formé par ces unités de barrières lumineuses fourchues.

5. Détecteur d'angle selon la revendication 4,
caractérisé en ce que
les différents segments (8) de l'anneau de code possèdent une perméabilité à la lumière différente.

6. Détecteur d'angle selon l'une des revendications 1 à 3,
caractérisé en ce que
l'anneau de code (7) est un anneau de code à réflexion et que les éléments sensoriels (4) sont des unités de barrières lumineuses à réflexion qui sont disposées vis-à-vis de l'anneau de code à réflexion.

7. Détecteur d'angle selon la revendication 6,
caractérisé en ce que
les unités de barrières lumineuses à réflexion sont disposés vis-à-vis de la circonférence interne et/ou externe de l'anneau de code à réflexion.

8. Détecteur d'angle selon la revendication 6 ou 7,
caractérisé en ce que les différents segments (8) de l'anneau de code à réflexion possèdent des propriétés de réflexion différentes.

9. Détecteur d'angle selon l'une des revendications 1 à 3,
caractérisé en ce que
les éléments sensoriels (4) sont des palpeurs à champ magnétique qui coopèrent chacun avec un aimant et que l'anneau de code (7) est un anneau obturateur magnétique doux.

10. Détecteur d'angle selon la revendication 9,
caractérisé en ce que
chacun des palpeurs à champ magnétique et l'aimant qui lui est coordonné sont disposés, l'un derrière l'autre, sur un côté de l'anneau de code obturateur magnétique doux.

11. Détecteur d'angle selon la revendication 9,
caractérisé en ce que
chacun des palpeurs à champ magnétique et l'aimant qui lui est coordonné sont disposés, vis-à-vis l'un de l'autre, sur différents côtés de l'anneau de code obturateur magnétique doux.

12. Détecteur d'angle selon l'une des revendications 1 à 3,
caractérisé en ce que
les éléments sensoriels (4) sont des palpeurs à champ magnétique et que l'anneau de code (7) est un anneau aimanté en permanence avec réaimantation codée.

13. Détecteur d'angle selon l'une des revendications 1 à 12,
caractérisé en ce que
l'anneau de code (7), en relation avec m éléments sensorielles (4) génère un code cyclique, enchaîné de m bit.

14. Détecteur d'angle selon l'une des revendications 1 à 13,
caractérisé en ce que
la zone d'angle inscrit est de 360°/5 = 72°.

15. Détecteur d'angle selon la revendication 14,
caractérisé en ce que
six éléments sensoriels (4) sont disposés sur la zone d'angle inscrit.

16. Equipement d'un dispositif de direction d'un véhicule automobile avec un détecteur d'angle selon l'une des revendications précédentes,
caractérisé en ce que
le stator (1) est monté, résistant à la torsion, sur le tube de protection 9 du dispositif de direction et que le rotor comprenant l'anneau de code (7) est relié, résistant à la torsion, à l'abre de conduite.
